Europäisches Patentamt

European Patent Office

Office européen des brevets

(19)

(11) Publication number: 0 326 147
A2

(12) EUROPEAN PATENT APPLICATION

(21) Application number: 89101421.9

(51) Int. Cl.⁴: G01N 27/28

(22) Date of filing: 27.01.89

(30) Priority: 27.01.88 US 149026

(43) Date of publication of application:
02.08.89 Bulletin 89/31

(84) Designated Contracting States:
BE DE ES FR GB IT

(71) Applicant: E.I. DU PONT DE NEMOURS AND
COMPANY
1007 Market Street
Wilmington Delaware 19898(US)

(72) Inventor: Shekiro, Joseph M., Jr.
305 Valley Road
Newark Delaware 19711(US)
Inventor: Braun, Juergen H. Coffee Run
Condo
614 Loveville Road Bldg. E, Apartment 1-H
Hockessin Delaware 19707(US)

(74) Representative: Abitz, Walter, Dr.-Ing. et al
Abitz, Morf, Gritschneder, Freiherr von
Wittgenstein Postfach 86 01 09
D-8000 München 86(DE)

(54) Measurement of the electrochemical characteristics of a composition.

(57) Method for measuring the electrochemical characteristics of a composition comprising (a) extracting a filtrate thorugh an ultrafiltration membrane, and (b) measuring one or more electrochemical characteristics of the filtrate.

# F I G. 1

EP 0 326 147 A2

# MEASUREMENT OF THE ELECTROCHEMICAL CHARACTERISTICS OF A COMPOSITION

## Background of the Invention

In various processes, and especially chemical processes, there is a need to monitor periodically or continuously various electrochemical characteristics, such as pH, specific ion content, total ion content, resistance, etc. For example, in the process for manufacturing $TiO_2$ pigment, pH is measured during various process steps to wash, surface treat, and finish the pigment. The pH must be carefully controlled to ensure that washing is complete and that the pH is at desired levels to apply the desired surface treatment and finishes to the pigment.

While it is desirable to measure such electrochemical characteristics in-process, i.e., by analyzing a composition which is a part of an operating process, numerous difficulties often are encountered. For example, the electrodes can be eroded by the particulate solids in the composition, the porous membrane of the electrodes can become plugged with solids from the composition, and the electrodes and other parts of the system measuring the electrochemical characteristics can become caked with sticky sediments. Consequently, in-process masurements of the electrochemical characteristics of a composition can be unreliable; therefore, such measurements are usually confirmed by "grab samples", i.e., samples which are periodically withdrawn from the in-process composition and analyzed in a laboratory.

It therefore would be desirable to have a method and device which could reliably measure the electrochemical characteristics of a composition, especially on an in-process, continuous or periodic basis.

## Summary of the Invention

In accordance with this invention there is provided the method for measuring the electrochemical characteristics of a composition comprising the steps of:

(a) providing a composition;

(b) contacting said composition with an ultrafiltration membrane;

(c) extracting a filtrate through said ultrafiltration membrane; and

(d) measuring one or more electrochemical characteristic of said filtrate.

There is also provided by this invention a device for measuring one or more electrochemical characteristics of a composition comprising:

(a) an ultrafiltration membrane arranged to be contacted by a composition on one side of said membrane and to produce a filtrate on the other side of said membrane;

(b) means for measuring one or more electrochemical characteristics of said filtrate; and

(c) means for passing said filtrate to said means for measuring one or more electrochemical characteristics of said filtrate.

It has been found that the method and device of this invention provide a reliable, inexpensive and commercially feasible means for measuring the electrochemical characteristics of a composition, especially on an in-process, continuous or periodic basis. The present invention also lessens the aforementioned problems of erosion, plugging, and caking (and the resulting maintenance expense and unreliable results); increases the life of the electrodes used to measure the electrochemical characteristics; and provides for more reliable process control.

## Detailed Description of the Invention

Any suitable composition can be used in this invention. Examples include slurries, suspensions, dispersions, solutions, mixtures, etc. which contain particulate or other matter which can interfere with the measurement of the electrochemical characteristics of the composition and at least some of which can be removed by ultrafiltration. Examples of specific suitable compositions include slurries of $TiO_2$, inorganic pigments, ores or various minerals, and paper or other fibrous pulp; paint; coating compositions; electrodeposition compositions; and various reaction media. Preferably, the composition will be aqueous or substantially aqueous.

Any suitable ultrafiltration membrane can be used in the process of this invention. Such ultrafiltration membranes have pore diameters of about 1-500 millimicrons. The selection of the necessary pore size is dependent on the size of the particles or dissolved substances desired to be removed from the composition. Examples of suitable membrane materials include polysulfone, cellulose acetate polymer, de-esterified cellulose, hydrolyzed cellulose acetate, polyethyleneimine, polyamide, and polyfurane. Preferred are polysulfone membranes such as the CX-30,000 NMWL membrane manufactured by Millipore Corporation, Bedford, Massachusetts, U.S.A. 01730.

The contacting of the composition with the ultrafiltration membrane can be carried out by any suitable means. Preferably, the composition is passed tangentially over the surface of the membrane. Agitation can be applied to the composition to inhibit the particulate suspended or dissolved material from clogging the pores of the ultrafiltration membrane. Generally, however, if the composition is passed tangentially over the surface of the membrane, agitation will not be necessary.

The next step is extracting a filtrate through the ultrafiltration membrane. This can be done by applying a positive pressure to the side of the membrane contacting the composition or by applying a negative pressure to the other side of the membrane (i.e., the side of the membrane not contacting the composition). If the composition is passed tangentially over the surface of the membrane, this generally creates enough differential pressure to extract a filtrate through the membrane.

The final step in the process of this invention is measuring one or more electrochemical characteristics of the filtrate. Electrochemical characteristics which can be measured include pH; total ion content; specific ion content (including sodium, potassium, chloride, carbonate, calcium, ammonium, etc.); and resistance. Meters and electrodes for measuring the foregoing electrochemical characteristics are commercially available.

## Description of the Drawings

For the purpose of illustrating the invention, there is shown in the drawings embodiments which are presently preferred. It is understood, however, that this invention is not limited to the precise devices, processes or instruments shown.

Figure 1 is a schematic representation of an embodiment of the present invention.

Figure 2 is a schematic representation of an alternative embodiment of the present invention.

Figure 3 is a schematic representation of another alternative embodiment of the present invention.

Referring to the drawings wherein like numerals indicate like elements, there are illustrated in the figures three embodiments of the present invention. The present invention is described with reference to the pH measurement of a titanium dioxide slurry; however, as mentioned previously, the invention is not limited to this application.

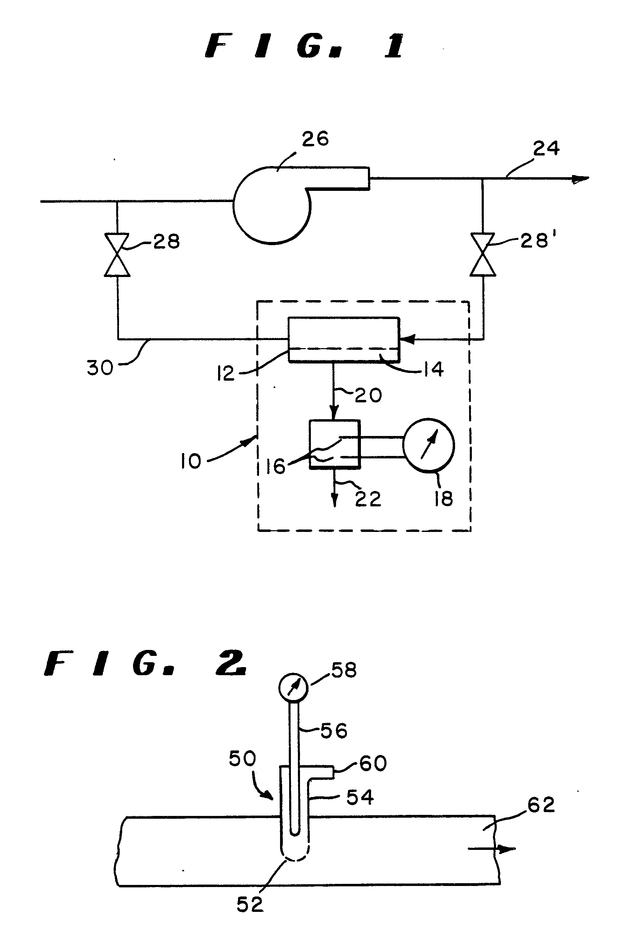

In Figure 1, the in-process measuring device 10 (within phantom lines) comprises an ultrafiltration membrane 12 located within a housing 14.

The filtrate side of housing 14 is in fluid communication, via conduit 20, with electrodes 16. Electrodes 16 are conventional pH electrodes, which are well known to those of ordinary skill in the art. Electrodes 16 are placed in contact with the filtrate. Electrodes 16 are coupled with a meter 18. Meter 18 is provided for converting the electrochemical potential of the slurry, as determined by the electrodes, into a pH measurement. This is well known to those of ordinary skill in the art. Of course, other electrodes and meters can be used to determine other electrochemical characteristics of the slurry.

Device 10 is placed in a sampling line 30. Sampling line 30 is provided with isolation valves 28, 28' ahead of and behind the device 10. Sampling line 30 is in fluid communication with a slurry process stream 24. The process stream 24 includes a pump 26. The pressure behind the pump is approximately 10 psig, and the pressure after the pump is approximately 50 psig. The process stream has a volumetric flow rate of approximately 500 gallons per minute. The numerical values for the line pressures and flow rate set forth above and hereafter are merely illustrative and are not limiting on the present invention. Sample line 30 is designed to take off approximately one-half gallon per minute of slurry at 50 psig. Filtrate is extracted from the ultrafilter at approximately 0.001 gallon per minute at atmospheric pressure and is discharged at waste outlet 22.

In Figure 2, an alternate embodiment 50 of the present invention is illustrated. Device 50 extends directly into the process stream 62 (at 50 psig). The device includes a housing 54. A first end of housing 54 extends into the process stream 62 and has an ultrafiltration membrane 52 at its tip. At the opposite end of housing 54 is a waste outlet 60 at atmospheric pressure. The electrodes 56 are placed within housing 54 such that filtrate from membrane 52 is in contact therewith. Electrodes 56 are coupled to a meter 58 in a known manner.

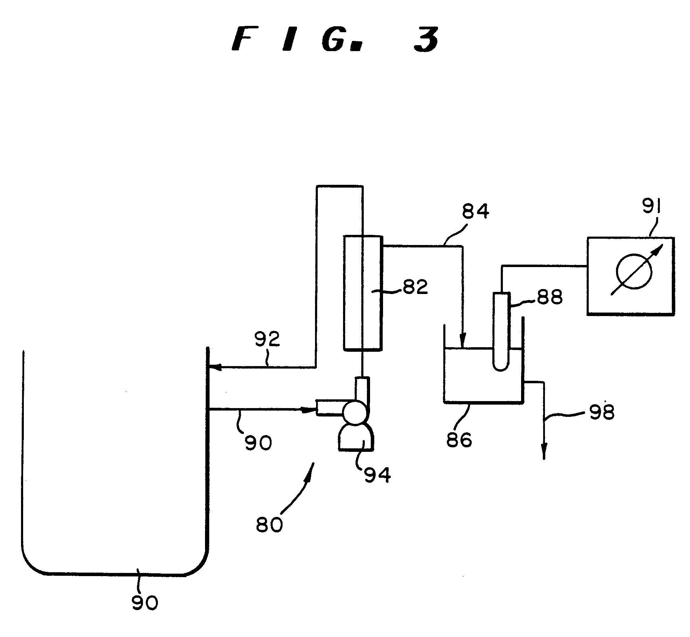

Referring to Figure 3, another alternate embodiment 80 of the present invention is illustrated. A slurry source 96 is in fluid communication, via conduits 90, 92 with a tubular ultrafilter pipe 82. Ultrafilter pipe 82 generally comprises a tubular ultrafiltration membrane which is coaxially located within the pipe (not shown). The slurry is passed through the tubular ultrafiltration membrane, and filtrate is collected between the pipe and the membrane.

Conduit 90 includes a pump 94 sized for approximately five gallons per minute discharge. Filtrate is collected from the ultrafiltrate pipe 82 at approximately 0.005 gallons per minute via conduit 84. Conduit 84 is in fluid communication with a filtrate collector 86 having a volume of approximately 0.01 gallon. Electrodes 88 are placed in contact with the filtrate within collector 86. Electrodes 88 are coupled with a meter 91 in a known manner. Collector 86 includes a waste overflow 98.

The present invention may be embodied in other specific forms without departing from the spirit or essential attributes thereof.

## Claims

1. Method for measuring the electrochemical characteristics of a composition comprising the steps of:

(a) providing a composition;

(b) contacting said composition with an ultrafiltration membrane;

(c) extracting a filtrate through said ultrafiltration membrane; and

(d) measuring one or more electrochemical characteristic of said filtrate.

2. The method of claim 1 wherein in step (a) the composition is part of or extracted from an operating process.

3. The method of claim 1 wherein in step (b) said contacting is carried out by passing said composition tangentially over said membrane.

4. The method of claim 1 wherein in step (d) the electrochemical characteristic being measured is pH, total ion content, specific ion content, resistance or combinations thereof.

5. The method of claim 1 wherein:

(i) the composition in step (a) is part of or extracted from an operating process;

(ii) the electrochemical characteristics being measured in step (d) is pH, total ion content, specific ion content, resistance or combinations thereof.

6. The method of claim 1 wherein:

(i) the composition in step (a) is part of or extracted from an operating process;

(ii) the contacting in step (b) is carried out by passing said composition tangentially over said membrane; and

(iii) the electrochemical characteristic being measured in step (d) is pH.

7. The method of any one of the preceding claims 1-6 wherein the composition is a slurry which is part of or extracted from a $TiO_2$ pigment process.

8. A device for measuring one or more electrochemical characteristics of a composition comprising:

(a) an ultrafiltration membrane arranged to be contacted by a composition on one side of said membrane and to produce a filtrate on the other side of said membrane;

(b) means for measuring one or more electrochemical characteristics of said filtrate; and

(c) means for passing said filtrate to said means for measuring one or more electrochemical characteristics of said filtrate.

# F I G. 1

# F I G. 2

# F I G. 3